# EUROPEAN PATENT SPECIFICATION

(11) **EP 1 260 092 B1**
(45) Date of publication and mention of the grant of the patent: **09.08.2006**
(21) Application number: 00945751.6
(22) Date of filing: 13.06.2000
(51) Int. Cl.: H04M 15/00

(54) **CHARGING CONTROL IN A MOBILE TELECOMMUNICATIONS SYSTEM**
STEUERUNG VON GEBÜHREN IN EINEM MOBILEN TELEKOMMUNIKATIONSSYSTEM
COMMANDE DE TAXATION DANS UN SYSTEME DE TELECOMMUNICATIONS MOBILES

(30) Priority: 31.07.1999 GB 9917896
(43) Date of publication of application: 27.11.2002
(73) Proprietor: TELEFONAKTIEBOLAGET LM ERICSSON (publ), 164 83 Stockholm (SE)
(72) Inventor: NILSSON, Patrik, FIN-20540 Turku (FI)
(74) Representative: Tonscheidt, Andreas
(86) International application number: PCT/EP2000/005464
(87) International publication number: WO 2001/010109

(56) References cited:
- WO-A-93/11646
- US-A- 5 557 655
- US-A- 5 732 127
- US-A- 5 898 915

## Description

### Field of the Invention

The present invention relates to charging control in a mobile telecommunications system and in particular to charging control for subscribers who are roaming in a foreign mobile network.

### Background to the invention

In today's mobile telecommunications networks, the operator of a mobile network is able to maintain tight control over the calls made and services used by its subscribers when they are at home, i.e. when they are registered with the operator's own network. For example, if a subscriber exceeds his calling credit limit the operator can notify the subscriber of this situation and/or can prevent the subscriber from making further calls until his outstanding account is settled. Similarly, where a subscriber makes use of a top-up account, e.g. using scratch cards to credit his account, an operator can restrict the subscriber's access when the subscriber's credit drops to zero.

Such charging control is possible because the Mobile Switching Centre (MSC) which acts as the "local exchange" for a subscriber sends Charging Data Records (CDRs) at regular intervals to a charging node of the subscriber's home network. However, this is only possible when the controlling MSC is an MSC of the home network. Currently CDRs from visited networks are passed to a home network through a clearing house in so-called TAP files. It can take at least two days or even more before the CDRs are forwarded on to home network.

A home network cannot monitor, in real time or near real time, the charges being incurred by one of its subscribers when that subscriber is roaming in a foreign network. Rather, charging information is only sent periodically from the foreign network to the home network (e.g. every few days). There therefore exists a possibility that fraud by a roaming subscriber will go undetected by the subscriber's home network for some time and that during that time the home network operator will incur considerable losses.

A direct consequence of fraud by roaming subscribers, or of fraud by counterfeit subscribers, is that mobile network operators often prevent certain categories of subscribers from using the roaming service. For example, users of top-up accounts are generally prevented from roaming. This situation is unacceptable to many potential subscribers.

US5,557,655 presents a solution to the problem of receiving data for supplementary services in an MSC/VLR.

WO93/11646 describes a mechanism for authenticating and aurthorising mobile subscribers roaming within a visited network.

US5,898,915 describes a system and method for monitoring fees arising from a mobile telephone call. A charge limit is defined for every call, and is provided to the responsible MSC.

US5,732,127 describes a procedure for transferring billing records from a telecommunications switch to an administrative billing centre.

### Summary of the Present Invention.

It is an object of the present invention to overcome or at least mitigate the above noted disadvantages. In particular, it is an object of the present invention to provide cost and fraud control for all roaming subscribers in real time or close to real time. It is also an object of the present invention to provide a method for transferring charging related information between a foreign network and a home network.

According to a first aspect of the present invention there is provided a method of controlling charging for a subscriber of a home network when the subscriber is roaming in a foreign network, the method comprising the steps of:
registering the subscriber with the foreign network including transferring from the home network to the foreign network one or more charging events predefined for the subscriber; and
in the event that a charging event occurs for the subscriber, sending a corresponding notification message from the foreign network to the home network, wherein the home network is subsequently able to terminate the subscriber's registration with the foreign network and/or restrict the subscriber's access to network services.

It will be appreciated that by predefining certain charging events for a subscriber and providing these to the foreign network, the subscriber's home network can be notified of certain events which are significant *vis-à-vis* charging. This is a much more efficient method for example than transferring CDRs from the foreign network to the home network even if this were possible.

Examples of charging events which may be predefined for a subscriber include; initiation of a telephone call, initiation of an international call, and a call exceeding a predefined duration.

Preferably, the charging event information for the subscriber is held at a Home Location Register (HLR) of the home network. The subscriber may be identified at the HLR by a unique International Mobile Subscriber Identity (IMSI).

Preferably, the or each charging event is transferred from the home network to a switching centre of the foreign network which is responsible for the subscriber. More preferably, the switching centre is a Mobile Switching Centre (MSC) or a GPRS Support Node (GSN).

Preferably, charging events and/or event notifications are transferred between the home network and the foreign network using a traffical protocol. More preferably, the traffical protocol is the Mobile Application Part (MAP) protocol. Alternatively, in a General Packet Radio Service (GPRS) network, the GPRS Tunnelling Protocol (GTP) may be used.

According to second aspect of the present invention there is provided apparatus for controlling charging for a subscriber of a home network when the subscriber is roaming in a foreign network, the apparatus comprising:
a register for use within the home network and having memory means for storing one or more charging events predefined for the subscriber;
registration means for use within the foreign network and arranged to register the roaming subscriber by contacting said register of the home network to obtain said charging event(s);
notification means for use within the foreign network and arranged to notify the home network in the event a charging events occurs for the subscriber, wherein in use the home network is subsequently able to terminate the subscriber's registration with the foreign network and/or restrict the subscriber's access to network services.

### Brief Description of the Drawings

Figure 1 illustrates schematically a telecommunications system embodying the present invention; and
Figure 2 is a flow diagram illustrating a method of controlling charging in the system of Figure 1.

### Detailed Description of Certain Embodiments

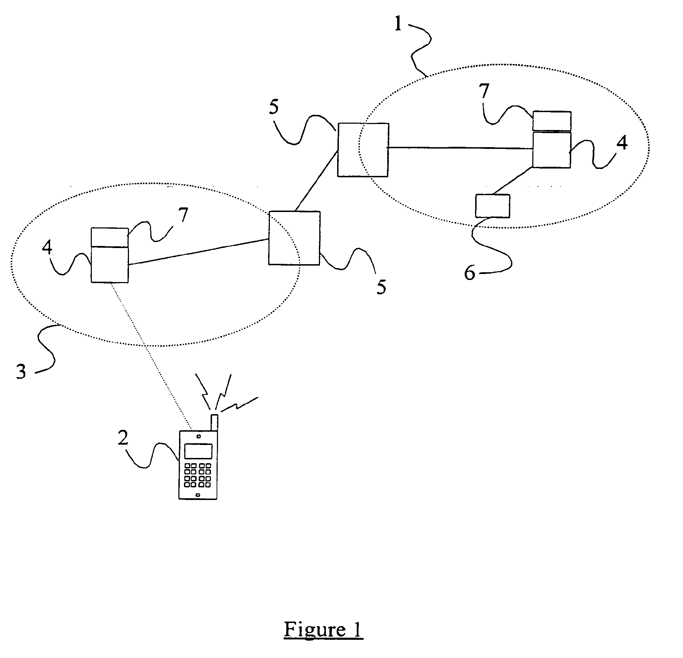

There is illustrated in Figure 1 a telecommunications system comprising two interconnected Public Land Mobile Networks (PLMNs). For the purposes of the following illustration, a first of the PLMNs 1 represents the home network of a subscriber using a mobile terminal 2, and is referred to as the Home PLMN (HPLMN). The second of the PLMNs 3 is referred to as the Visited PLMN (VPLMN). Both networks are Global System for Mobile communications (GSM) based networks and comprise a number of Mobile Switching Centres (MSCs) 4. The networks 1,2 are coupled via respective Gateway MSCs (GMSCs) 5. Each network also comprises Base Transceiver Stations (BTSs) and Base Station Controllers (BSCs) which serve as the interface between mobile terminals and MSCs, although these are omitted from Figure 1.

Both of the networks comprise a Home Location Register (HLR) 6 although this is only illustrated in Figure 1 for the HPLMN 1. The HLR 6 maintains a record of all of the subscribers of the HPLMN 2, including the International Mobile Subscriber Identity (IMSI) for each subscriber and which is used by a subscriber to register with a network. For each subscriber, the HLR 6 has the option of recording one or more so-called "calling events". The function of a calling event will be described further below.

Associated with each MSC 4 is a Visitor Location Register (VLR) 7 which maintains a record of subscribers currently registered with the associated MSC 4. The record includes subscribers for whom the MSC 4 is a home MSC, as well as subscribers for whom the MSC 4 is a foreign network. In the event that the subscriber using the terminal 2 roams outside of the coverage area of his HPLMN 1 and into the coverage area of the VPLMN 3, his terminal 2 will seek to register with an MSC 4 of the VPLMN 3 after the MSC 4 has determined that the subscriber is a foreign network and has not already been registered in the associated VLR 7.

The registration process is initiated by the terminal 2 sending to the controlling MSC 4 his IMSI. In order to authenticate the subscriber, the MSC 4 uses the Mobile Application Part (MAP) protocol to send a MAP_UPDATE_LOCATION message to the HLR 6 of the subscriber's HPLMN 1 (the HPLMN 1 is identified by a prefix part of the IMSI). Assuming that the HLR 6 verifies the IMSI contained in the message, the HLR 6 returns a MAP_INSERT_SUBSCRIBER_DATA message to the controlling MSC. The returned message also includes any charging events which are recorded by the HLR 6 for the subscriber in question. Examples of subscriber events include; initiation of a telephone call, initiation of an international call, and a call exceeding a predefined duration. In the event that the HLR 6 cannot verify the subscriber, an appropriate message is returned to the controlling MSC 4.

Assuming now that the controlling MSC 4 does indeed receive a MAP_UPDATE_SUBSCRIBER_DATA message from the HLR 6 of the HPLMN 1, the subscriber is registered in the VLR 7. Any received charging events are also recorded in the VLR 7. The controlling MSC 4 uses the Fraud Information Gathering System (FIGS) to monitor the subscriber's activity for the occurrence of any of the charging events notified for the subscriber. FIGS is specified in GSM 01.31 (service requirements) and 02.31 (service description).

For example, if a charging event for the subscriber is the initiation of an international call and the subscriber initiates such a call, the controlling MSC 4 suspends the call set-up process, and sends a CHARGING_EVENT_NOTIFICATION MAP message to the HPLMN 1 advising the HPLMN I that the charging event has occurred. The EVENT_NOTIFICATION message may be a new message defined within the MAP protocol, and may be delivered to the HLR 6 or to some general charging node. If the HPLMN 1 decides to terminate the subscriber's connection, it may return to the controlling MSC a MAP_CANCEL_LOCATION message (which is an Immediate Service Termination function - see GSM 02.32). Other MAP messages may also be defined for instructing the controlling MSC to take other specific actions as well as for confirming to the HPLMN from the controlling MSC the action taken. The controlling MSC may continue with the set-up process or terminate the subscriber's access depending upon the received message.

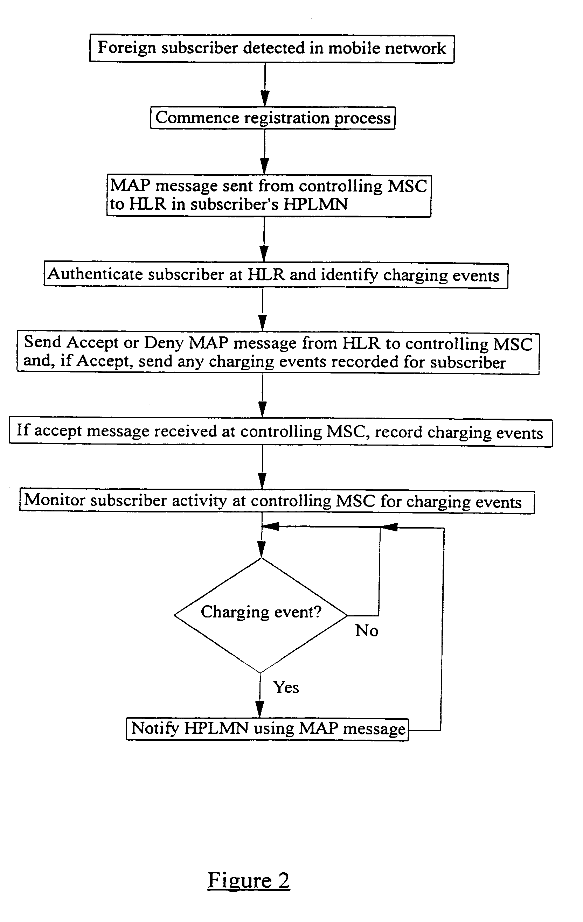

Figure 2 is a flow diagram further illustrating the method described above.

Messages relating to charging events are sent between the HPLMN 1 and the VPLMN 3 using the MAP protocol. MAP is a traffical protocol which enables the real time transfer of charging related information (subject of course to small transmission delays). In this way it is possible to monitor the charging related activities of roaming subscribers in a way which does not greatly increase inter-network signalling traffic. Moreover, the possibility to define different charging events for different subscribers provides operators with maximum flexibility.

It will be appreciated by the person of skill in the art that various modifications may be made to the above described embodiment without departing from the scope of the present invention. For example, rather than GSM networks, the invention may be employed in third generation UMTS networks. It will further be appreciated that the terms used above, e.g. MSC, GMSC, etc, may have different equivalents in UMTS. Where the network is a GPRS based network, charging information may be exchanged between Serving GPRS Support Nodes (SGSNs) and Gateway GPRS Support Nodes (GGSNs).

## Claims

1. A method of controlling charging for a subscriber of a home network when the subscriber is roaming in a foreign network, the method comprising the steps of:
registering the subscriber with the foreign network including transferring from the home network to the foreign network one or more charging events predefined for the subscriber; and
in the event that a charging event occurs for the subscriber, sending a corresponding notification message from the foreign network to the home network, wherein the home network is subsequently able to terminate the subscriber's registration with the foreign network and/or restrict the subscriber's access to network services.

2. A method according to claim 1 and comprising holding the charging event information for the subscriber at a Home Location Register HLR of the home network.

3. A method according to claim 1 or 2 and comprising transferring the or each charging event from the home network to a switching centre of the foreign network which is responsible for the subscriber.

4. A method according to claim 3, wherein the switching centre is a Mobile Switching Centre MSC or a GPRS Support Node GSN.

5. A method according to any one of the preceding claims and comprising transferring charging events and/or event notifications between the home network and the foreign network using a traffical protocol.

6. A method according to claim 5, wherein the traffical protocol is the Mobile Application Part protocol or the GPRS Tunnelling Protocol GTP.

7. Apparatus for controlling charging for a subscriber (2) of a home network (1) when the subscriber is roaming in a foreign network (3), the apparatus comprising:
a register (6) for use within the home network and having memory means for storing one or more charging events predefined for the subscriber;
registration means(7) for use within the foreign network and arranged to register the roaming subscriber by contacting said register (6) of the home network to obtain said charging events;
notification means for use within the foreign network (3) and arranged to notify the home network (1) in the event a charging events occurs for the subscriber, wherein in use the home network is subsequently able to terminate the subscriber's registration with the foreign network and/or restrict the subscriber's access to network services.

## Patentansprüche

1. Verfahren zum Steuern der Vergebührung für einen Teilnehmer eines Heimatnetzes, wenn der Teilnehmer in einem fremden Netz roamt, bereitgestellt, wobei das Verfahren die folgenden Schritte umfasst:
Registrieren des Teilnehmers bei dem fremden Netz, einschließlich des Übermittelns eines oder mehrerer Charging Events, die für den Teilnehmer vordefiniert sind, von dem Heimatnetz zu dem fremden Netz; und
in dem Falle, wenn ein Charging Event für den Teilnehmer eintritt, Senden einer entsprechenden Benachrichtigung von dem fremden Netz zu dem Heimatnetz, wobei das Heimatnetz anschließend in der Lage ist, die Registrierung des Teilnehmers bei dem fremden Netz zu beenden und/oder den Zugang des Teilnehmers zu Netzdiensten einzuschränken.

2. Verfahren nach Anspruch 1, welches das Aufbewahren der Charging-Event-Informationen für den Teilnehmer in einem Heimatregister HLR des Heimatnetzes umfasst.

3. Verfahren nach Anspruch 1 oder 2, welches das Übermitteln des oder jedes Charging Events von dem Heimatnetz zu einer Vermittlungsstelle des fremden Netzes, welches für den Teilnehmer zuständig ist, umfasst.

4. Verfahren nach Anspruch 3, wobei die Vermittlungsstelle eine Mobilfunkvermittlungsstelle MSC oder ein GPRS Support Node GSN ist.

5. Verfahren nach einem der vorhergehenden Ansprüche, welches das Übermitteln von Charging Events und/oder Benachrichtigungen von Ereignissen zwischen dem Heimatnetz und dem fremden Netz unter Verwendung eines Verkehrsprotokolls umfasst.

6. Verfahren nach Anspruch 5, wobei das Verkehrsprotokoll das Mobilanwenderteil- (Mobile Application Part) Protokoll oder das GPRS Tunnelling Protocol GTP ist.

7. Vorrichtung zum Steuern der Vergebührung für einen Teilnehmer (2) eines Heimatnetzes (1), wenn der Teilnehmer in einem fremden Netz (3) roamt, wobei die Vorrichtung umfasst:
ein Register (6) zur Verwendung innerhalb des Heimatnetzes, das Speichermittel zum Speichern eines oder mehrerer Charging Events aufweist, die für den Teilnehmer vordefiniert sind;
Registrierungsmittel (7) zur Verwendung innerhalb des fremden Netzes, die so beschaffen sind, dass sie den roamenden Teilnehmer registrieren, indem sie mit dem Register (6) des Heimatnetzes Kontakt aufnehmen, um die Charging Events zu erhalten;
Benachrichtigungsmittel zur Verwendung innerhalb des fremden Netzes (3), die so beschaffen sind, dass sie das Heimatnetz (1) benachrichtigen, falls ein Charging Event für den Teilnehmer eintritt, wobei in Verwendung des Heimatnetz anschließend in der Lage ist, die Registrierung des Teilnehmers bei dem fremden Netz zu beenden und/oder den Zugang des Teilnehmers zu Netzdiensten einzuschränken.

## Revendications

1. Procédé de contrôle de la facturation pour un abonné d'un réseau de rattachement lorsque l'abonné se déplace dans un réseau étranger, le procédé comprenant les étapes consistant à :
enregistrer l'abonné dans le réseau étranger en incluant le transfert du réseau de rattachement vers le réseau étranger d'un ou plusieurs évènements de facturation prédéfinis pour l'abonné ; et
au cas où un évènement de facturation a lieu en ce qui concerne l'abonné, envoyer un message de notification correspondant du réseau étranger au réseau de rattachement, moyennant quoi le réseau de rattachement est par la suite en mesure de mettre fin à l'enregistrement de l'abonné dans le réseau étranger et/ou à restreindre l'accès de l'abonné aux services du réseau.

2. Procédé selon la revendication 1 et comprenant la conservation de l'information relative à l'évènement de facturation de l'abonné dans un registre de localisation d'origine (HLR) du réseau de rattachement.

3. Procédé selon la revendication 1 ou 2 et comprenant le transfert du ou de chaque évènement de facturation du réseau de rattachement vers un centre de commutation du réseau étranger qui est en charge de l'abonné.

4. Procédé selon la revendication 3, dans lequel le centre de commutation est un centre de commutation pour les services mobiles (MSC) ou un noeud de support de service GPRS (GSN).

5. Procédé selon l'une quelconque des revendications précédentes et comprenant le transfert des évènements de facturation et/ou des notifications d'évènements entre le réseau de rattachement et le réseau étranger en utilisant un protocole de trafic.

6. Procédé selon la revendication 5, dans lequel le protocole de trafic est le protocole de Sous-système Application Mobile (MAP) ou le protocole de Tunnelisation GPRS (GTP).

7. Appareil pour contrôler la facturation d'un abonné (2) d'un réseau de rattachement (1) lorsque l'abonné se déplace dans un réseau étranger (3), l'appareil comprenant :
un registre (6) utilisé à l'intérieur du réseau de rattachement et comportant un moyen de mémoire pour mémoriser un ou plusieurs évènements de facturation prédéfinis pour l'abonné ;
un moyen d'enregistrement (7) utilisé à l'intérieur du réseau étranger et conçu de manière à enregistrer l'abonné itinérant en contactant ledit registre (6) du réseau de rattachement afin d'obtenir lesdits évènements de facturation ;
un moyen de notification utilisé à l'intérieur du réseau étranger (3) et conçu de manière à notifier au réseau de rattachement (1) le cas où un évènement de facturation a lieu pour l'abonné, moyennant quoi le réseau de rattachement utilisé est ensuite en mesure de mettre fin à l'enregistrement de l'abonné dans le réseau étranger et/ou à restreindre l'accès de l'abonné aux services du réseau.
